(19) Europäisches Patentamt / European Patent Office / Office européen des brevets

(11) **EP 4 592 946 A1**

(12) **EUROPEAN PATENT APPLICATION**

(43) Date of publication:
**30.07.2025 Bulletin 2025/31**

(51) International Patent Classification (IPC):
***G06T 7/00*** *(2017.01)*

(21) Application number: **24215947.3**

(52) Cooperative Patent Classification (CPC):
**G06T 7/0004;** G06T 2207/10004;
G06T 2207/20084; G06T 2207/30124

(22) Date of filing: **27.11.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.01.2024 CN 202410105003**

(71) Applicants:
- **Zhejiang Hengyi Petrochemical Co., Ltd.**
  **Zhejiang 311200 (CN)**
- **Hangzhou Yitong New Material Co., Ltd.**
  **Hangzhou, Zhejiang 311247 (CN)**

(72) Inventors:
- **PENG, Xiantao**
  **Hangzhou, 311200 (CN)**
- **WANG, Peng**
  **Hangzhou, 311200 (CN)**
- **QIU, Yibo**
  **Hangzhou, 311200 (CN)**
- **LIU, Mingyi**
  **Hangzhou, 311200 (CN)**
- **WU, Xuan**
  **Hangzhou, 311200 (CN)**
- **GAO, Jiabo**
  **Hangzhou, 311200 (CN)**
- **TENG, Zheng**
  **Hangzhou, 311200 (CN)**

(74) Representative: **EIP**
**Fairfax House**
**15 Fulwood Place**
**London WC1V 6HU (GB)**

(54) **FAULT DETECTION METHOD AND APPARATUS, DEVICE AND STORAGE MEDIUM**

(57) Provided is a fault detection method and apparatus, and a storage medium. The method includes: capturing (S301) an image of a false twist component to obtain a target image; constructing (S302) a first fusion feature based on at least one attention module; for each attention module, the attention module includes a first sub-module and a second sub-module, the first sub-module constructs a first sub feature with respect to fine-granularity features within first visual field ranges and coarse-granularity features within second visual field ranges in first input information, and the second sub-module obtains a mask map; inputting (S303) the first fusion feature into an encoder network to obtain an encoded feature; decoding (S304) the encoded feature to obtain a decoded feature; obtaining (S305) a second fusion feature based on the decoded feature; and inputting (S306) the second fusion feature into a multi-layer perceptron to obtain a fault detection result.

```
S301 — Capture an image of a false twist component of a texturing machine to obtain a target image

S302 — Construct a first fusion feature based on at least one attention module in an attention network; where for each attention module, the attention module includes a first sub module and a second sub module, the first sub module constructs a first sub feature with respect to fine-granularity features within first visual field ranges and coarse-granularity features within second visual field ranges in first input information, and the second sub module obtains a mask map by using a residual constructed based on second input information, an output feature of the attention module is obtained by multiplying the mask map with the first sub feature, and the first visual field ranges are smaller than the second visual field ranges

S303 — Input the first fusion feature into an encoder network to obtain an encoded feature; where the encoder network includes a plurality of encoders, each encoder outputs a corresponding encoded sub feature, and the encoded feature includes the encoded sub feature of at least one encoder

S304 — Decode the encoded feature based on a decoder network to obtain a decoded feature; where the decoder network includes a plurality of decoders, each decoder outputs a corresponding decoded sub feature, and the decoded feature includes decoded sub features of the plurality of decoders

S305 — Fuse the respective decoded sub features in the decoded feature to obtain a second fusion feature

S306 — Input the second fusion feature into a multi-layer perceptron to obtain a fault detection result of the false twist component of the texturing machine
```

FIG. 3

EP 4 592 946 A1

**Description**

TECHNICAL FIELD

The present disclosure relates to the field of computer technology, in particular, to technical fields of artificial intelligence, computer vision, image processing and the like.

BACKGROUND

In an industrial scenario of a texturing process, a texturing machine plays an important role in a spinning process flow. In related art, yarn involved in a texturing workshop includes preoriented yarn (POY, abbreviated as POY raw yarn) and draw textured yarn (DTY).

The texturing machine obtains the DTY by processing the POY raw yarn. The texturing machine contains a false twist component therein. The false twist component completes a false twist operation of the POY raw yarn. In a case of frequent use of the texturing machine, the false twist component of the texturing machine may wear out, which in turn affects a texturing process flow. Therefore, how to automate monitoring of the false twist component of the texturing machine is a problem faced in the related art.

SUMMARY

The present disclosure provides a fault detection method and apparatus, a device and a storage medium, to achieve monitoring of a false twist component during a texturing process flow.

In a first aspect, the present disclosure provides a fault detection method, characterized by including:

capturing an image of a false twist component of a texturing machine to obtain a target image;

constructing a first fusion feature based on at least one attention module in an attention network; where for each attention module, the attention module includes a first sub module and a second sub module, the first sub module constructs a first sub feature with respect to fine-granularity features within first visual field ranges and coarse-granularity features within second visual field ranges in first input information, and the second sub module obtains a mask map by using a residual constructed based on second input information, an output feature of the attention module is obtained by multiplying the mask map with the first sub feature, and the first visual field ranges are smaller than the second visual field ranges;

inputting the first fusion feature into an encoder network to obtain an encoded feature; where the encoder network includes a plurality of encoders, each encoder outputs a corresponding encoded sub feature, and the encoded feature includes the encoded sub feature of at least one encoder;

decoding the encoded feature based on a decoder network to obtain a decoded feature; where the decoder network includes a plurality of decoders, each decoder outputs a corresponding decoded sub feature, and the decoded feature includes decoded sub features of the plurality of decoders;

fusing the respective decoded sub features in the decoded feature to obtain a second fusion feature; and

inputting the second fusion feature into a multi-layer perceptron to obtain a fault detection result of the false twist component of the texturing machine.

In a second aspect, the present disclosure provides a fault detection apparatus, characterized by including:

a capturing unit configured to capture an image of a false twist component of a texturing machine to obtain a target image;

a constructing unit configured to construct a first fusion feature based on at least one attention module in an attention network; where for each attention module, the attention module includes a first sub module and a second sub module, the first sub module constructs a first sub feature with respect to fine-granularity features within first visual field ranges and coarse-granularity features within second visual field ranges in first input information, and the second sub module obtains a mask map by using a residual constructed based on second input information, an output feature of the attention module is obtained by multiplying the mask map with the first sub feature, and the first visual field ranges are smaller than the second visual field ranges;

an encoding unit configured to input the first fusion feature into an encoder network to obtain an encoded feature; where the encoder network includes a plurality of encoders, each encoder outputs a corresponding encoded sub feature, and the encoded feature includes the encoded sub feature of at least one encoder;

a decoding unit configured to decode the encoded feature based on a decoder network to obtain a decoded feature; where the decoder network includes a plurality of decoders, each decoder outputs a corresponding decoded sub feature, and the decoded feature includes decoded sub features of the plurality of decoders;

a fusing unit configured to fuse the respective decoded sub features in the decoded feature to obtain a second fusion feature; and

a predicting unit configured to input the second fusion feature into a multi-layer perceptron to obtain a fault detection result of the false twist component of the texturing machine

In a third aspect, an electronic device is provided, which includes:

at least one processor; and
a memory connected in communication with the at least one processor;
where the memory stores an instruction executable by the at least one processor, and the instruction, when executed by the at least one processor, enables the at least one processor to execute the method of any embodiment of the present disclosure.

In a fourth aspect, a non-transitory computer-readable storage medium storing a computer instruction thereon is provided, where the computer instruction is used to cause a computer to execute the method of any embodiment of the present disclosure.

In a fifth aspect, a computer program product is provided, where the computer program product includes a computer program, which when executed by a processor, implements the method of any embodiment of the present disclosure.

Based on the manner proposed by the embodiments of the present disclosure, an automatic detection flow of the false twist component of the texturing machine is achieved.

It should be understood that the content described in this part is not intended to identify critical or essential features of embodiments of the present disclosure, nor is it used to limit the scope of the present disclosure. Other features of the present disclosure will be easily understood through the following description.

BRIEF DESCRIPTION OF THE DRAWINGS

In the accompanying drawings, the same reference numbers represent the same or similar components or elements throughout the accompanying drawings, unless otherwise specified. These accompanying drawings are not necessarily drawn to scale. It should be understood that these accompanying drawings only depict some embodiments provided according to the present disclosure, and should not be considered as limiting the scope of the present disclosure.

FIG. 1 is a schematic diagram of a texturing machine according to an embodiment of the present disclosure;
FIG. 2 is a schematic diagram of a false twist component according to an embodiment of the present disclosure;
FIG. 3 is a schematic flow diagram of a fault detection method according to an embodiment of the present disclosure;
FIG. 4 is a schematic architecture diagram of a whole neural network model according to an embodiment of the present disclosure;
FIG. 5 is a schematic diagram of a first sub-module of an attention module according to an embodiment of the present disclosure;
FIG. 6 is a schematic diagram of a second sub-module of an attention module according to an embodiment of the present disclosure;
FIG. 7 is a schematic diagram of an encoder network and a decoder network according to an embodiment of the present disclosure;
FIG. 8 is a schematic diagram of an encoder according to an embodiment of the present disclosure;
FIG. 9 is a schematic structure diagram of a fault detection apparatus according to an embodiment of the present disclosure; and
FIG. 10 is a block diagram of an electronic device for implementing a fault detection method according to an embodiment of the present disclosure.

DETAILED DESCRIPTION

The present disclosure will be described below in detail with reference to the accompanying drawings. The same reference numbers in the accompanying drawings represent elements with identical or similar functions. Although various aspects of the embodiments are shown in the accompanying drawings, the accompanying drawings are not necessarily drawn to scale unless specifically indicated.

In addition, in order to better illustrate the present disclosure, numerous specific details are given in the following specific implementations. Those having ordinary skill in the art should understand that the present disclosure may be performed without certain specific details. In some examples, methods, means, elements and circuits well known to those having ordinary skill in the art are not described in detail, in order to highlight the subject matter of the present disclosure.

Furthermore, terms "first" and "second" are only used for a purpose of explanation, and cannot be construed to indicate or imply relative importance or implicitly point out a number of technical features that are indicated. Therefore, a feature defined with "first" or "second" may explicitly or implicitly include one or more features. In the description of the present disclosure, "a plurality of" means two or more, unless otherwise specified

In an industrial scenario of a texturing process, a false twist component of a texturing machine may wear out, and thus the false twist component of the texturing machine needs to be monitored.

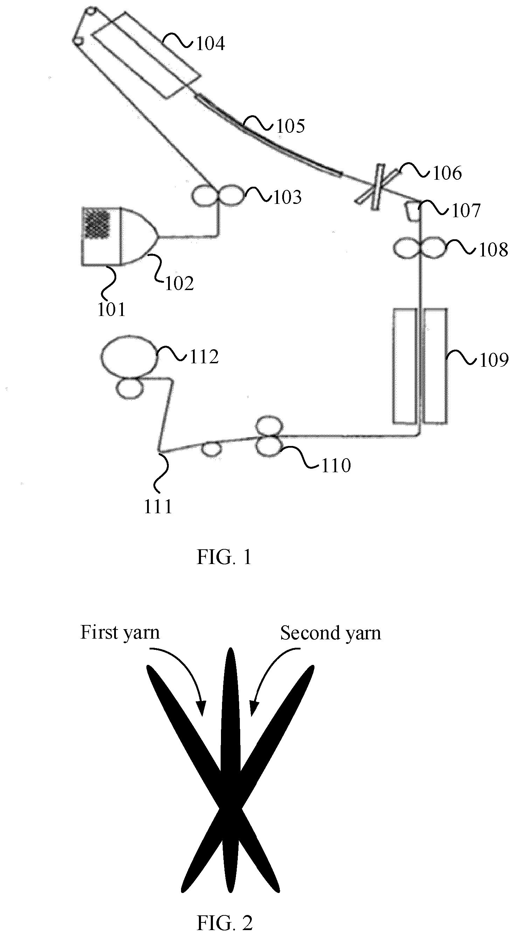

Where a possible schematic diagram of key structures of a texturing machine is shown in FIG. 1. The key structures of the texturing machine include a raw yarn frame 101, a yarn cutter 102, a first roller 103, a first heat box 104, a cooling plate 105, a false twist component 106, a nozzle 107, a second roller 108, a second heat box 109, a third roller 110, a breakage detection apparatus 111, and a winding component 112.

Where the first roller 103, the second roller 108 and the third roller 110 are used to ensure that yarn is processed according to a determined path. During a texturing process flow, speeds of the first roller 103, the second roller 108, and the third roller 110 are matched with each other to ensure that yarn fabrics are not pulled broken or stacked.

According to requirements of a product form, the nozzle 107 may be used to process yarn processed by the false twist component into a yarn product of a mesh form, to ensure that different yarn products have the required texture and form.

In a case of producing of highly textured yarn, the second heat box 109 may be omitted. In a case of producing moderately textured yarn, a temperature of the second hot box 109 may be adjusted to a first preset temperature, for example, the first preset temperature may be around 140 °C. In a case of producing of lowly textured yarn, the temperature of the second hot box 109 may be adjusted to a second preset temperature, for example, the second preset temperature may be between 165~195 °C.

When the breakage detection apparatus 111 detects a broken end, it will trigger the yarn cutter 102 to cut yarn, avoiding accumulation of POY raw yarn in a subsequent process.

In a case of processing a single strand of yarn, a corresponding false twist component is shown as 106 in FIG. 1, which mainly uses two rubber rollers to rub the yarn fabrics. In a case of processing multiple strands of yarn, the false twist component 106 processes the multiple strands of yarn into a composite strand of yarn. One possible example is shown in FIG. 2, in which first yarn passes through from the top left side and second yarn passes through from the top right side, and then these two strands of yarn are composited to obtain one strand of yarn.

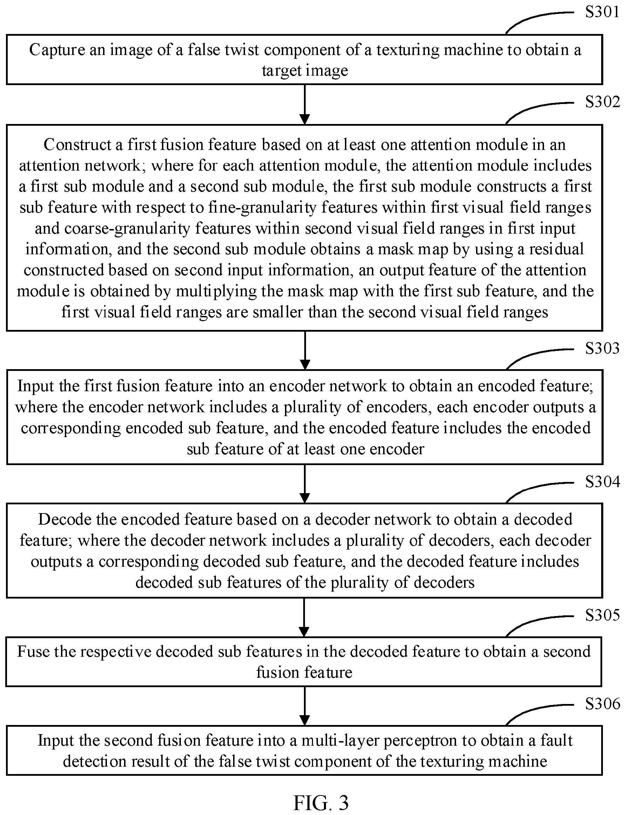

In order to automatically and accurately detect the false twist component of the texturing machine, a fault detection method is proposed in the embodiments of the present disclosure, which is shown in FIG. 3 and includes following operations.

In S301, an image of the false twist component of the texturing machine is captured to obtain a target image.

A drone may be used to conduct scheduled inspections on the false twist component of the texturing machine, the image of the false twist component may also be captured based on monitoring, and any method that may obtain the image of the false twist component may be applied to the embodiments of the present disclosure.

In S302, a first fusion feature is constructed based on at least one attention module in an attention network; where for each attention module, the attention module includes a first sub module and a second sub module, the first sub module constructs a first sub feature with respect to fine-granularity features within first visual field ranges and coarse-granularity features within second visual field ranges in first input information, and the second sub module obtains a mask map by using a residual constructed based on second input information; an output feature of the attention module is obtained by multiplying the mask map with the first sub feature; the first visual field ranges are smaller than the second visual field ranges.

In S303, the first fusion feature is input into an encoder network to obtain an encoded feature; where the encoder network includes a plurality of encoders, each encoder outputs a corresponding encoded sub feature, and the encoded feature includes the encoded sub feature of at least one encoder.

In S304, the encoder feature is decoded based on a decoder network to obtain a decoded feature; where the decoder network includes a plurality of decoders, each decoder outputs a corresponding decoded sub feature, and the decoded feature includes decoded sub features of the plurality of decoders.

In S305, the respective decoded sub features in the decoded feature are fused to obtain a second fusion feature.

In S306, the second fusion feature is input into a multi-layer perceptron to obtain a fault detection result of the false twist component of the texturing machine.

Where the attention network, the encoder network, the decoder network and the multi-layer perceptron may train parameters in these models including the attention network, the encoder network, the decoder network and the multi-layer perceptron by using a real image of a history false twist component as a sample image. Specifically, a fault position and a fault type in the sample image are annotated, the fault type may be a degree of wear. A predicted fault position and a predicted degree of wear are obtained by inputting the sample image into an attention network to be trained, an encoder network to be trained, a decoder network to be trained and a multi-layer perceptron to be trained sequentially. A first loss value is obtained based on a loss between the predicted fault position and a real fault position, and a second loss value is obtained based on a loss between the predicted degree of wear and a real degree of wear. A target loss is obtained by weighting and summing the first loss value and the second loss value. Parameters in the attention network to be trained, the encoder network to be trained, the decoder network to be trained and the multi-layer perceptron to be trained are adjusted based on the target loss. In a case of satisfying a convergence condition, the attention network, the encoder network, the decoder network and the multi-layer perceptron are obtained to perform fault detection on the target image of the false twist component of the texturing machine.

In the embodiments of the present disclosure, the attention network includes at least one attention module, the fine-granularity features represent local details of interest, and the coarse-granularity features represent surrounding features of the local details. By using the fine-granularity features and the coarse-granularity features, information that conforms to visual characteristics can be acquired and features within different granularity ranges can be fused to improve an expressive ability of extracting the features, thereby helping accurately detect the false twist component. In addition, the same attention module further fuses the residual constructed from the second input information of the false twist component, so that a soft attention feature is further fused in the output feature of the attention module. Thus, the same attention module extracts the features of the false twist component from a plurality of perspectives, thereby improving a feature expression ability and enhancing accuracy of the detection result. Moreover, as a number of attention modules in the attention network increases, an expression ability of extracting an output feature of the target image becomes stronger. Furthermore, the output feature is input into subsequent encoders and decoders, any one encoder in the encoder network has one corresponding decoder in the decoder network, thus the decoded sub features output by the plurality of decoders are fused to obtain the second fusion feature, then the second fusion feature is input into the multi-layer perceptron to obtain the fault detection result of the false twist component of the texturing machine, thereby achieving an automatic detection flow of the false twist component of the texturing machine.

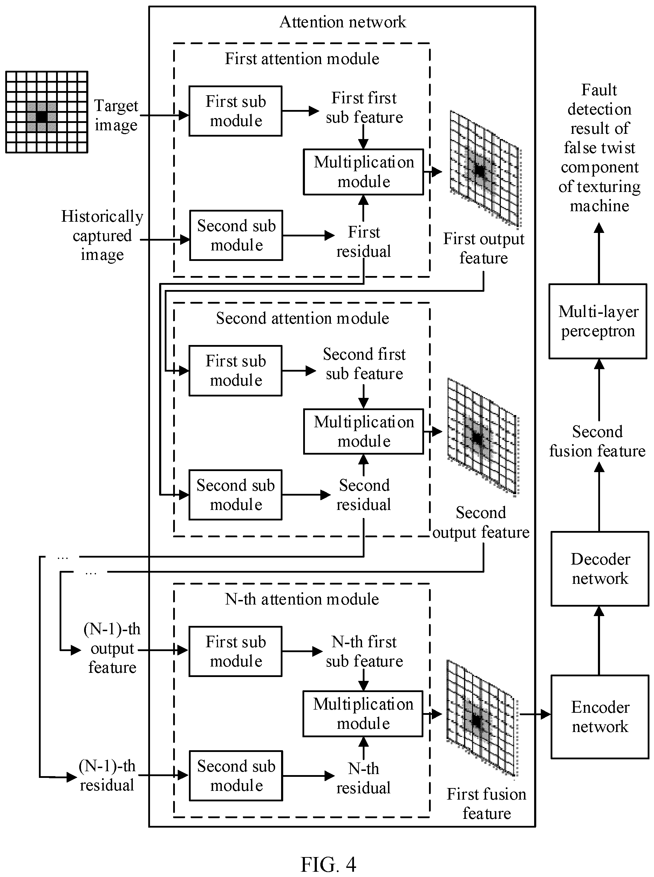

An architecture of an entire neural network model proposed in the embodiments of the present disclosure is shown in FIG. 4, and the model includes the attention network, the encoder network, the decoder network and the multi-layer perceptron. A specific structure of each network is described in detail as below.

**1) Attention network**

In some embodiments, the attention network is shown in FIG. 4, and may include N attention modules which include a first attention module, a second attention module, ..., and a N-th attention module as shown in FIG. 4, N is a positive integer. Specific input information and out information of each attention module may be described as follows.

1) For the first attention module in the attention network:

The first input information of the first sub module of the first attention module is the target image.

The second input information of the second sub module of the first attention module includes the target image and at least one historically captured image of the false twist component, and a capturing time interval between the target image and any one historically captured image is less than a preset time period.

The historically captured images may be m images obtained by sampling at equal intervals within a preset time period before capturing the target image. For example, if the target image sampled at time t, the preset period is a, and an image is captured at every interval of b, a first historically captured image will be captured at time t-a, a second historically captured image will be captured at time t-a+b, and so on. Of course, the historically captured images may also be obtained by sampling at unequal intervals within the preset period. Any method that may obtain the historically captured images may be applied to embodiments of the present disclosure.

2) For any one attention module other than the first attention module in the attention network:

The first input information of the first sub module of the any one attention module is an output feature output by a previous attention module of the any one attention module.

The second input information of the second sub module of the any one attention module is a residual output by the second sub module of the previous attention module of the any one attention module.

As shown in FIG. 4, an input of the first sub module of the first attention module is the target module, and an output thereof is a first first sub feature. An input of the second sub module of the first attention module is a historically captured image, and an output thereof is a first residual. The first first sub feature and the first residual are multiplied with each other to obtain an output of the first attention module, that is a first output feature. The first output feature is taken as an input of the first sub module of the second attention module, and an output thereof is a second one first sub feature. The first residual is taken as an input of the second attention module, and an output thereof a second residual, these processes are performed in sequence until the N-th attention module completes the processes, then an output of the attention network is the first fusion feature.

In the embodiments of the present disclosure, the target image may be used to detect a real-time state of the false twist component, thereby achieving fault detection. The historically captured images of the target image may be used to determine changes of the false twist components within the preset period. Feature expression of the false twist component is extracted by considering both the real-time state of and a historical state of the target image, in order to detect the degree of wear of the false twist component.

In some embodiments, constructing the first sub feature with respect to the fine-granularity features within the first visual field ranges and the coarse-granularity features within the second visual field ranges in the first input information may be implemented as following steps A1 and A2.

In step A1, a plurality of target points are determined in the first input information, and following steps A11 to A14 are performed on each target point.

In step A11, a fine-granularity feature of the target point is extracted within a first visual field range centered on the target point.

In some embodiments, extracting the fine-granularity feature of the target point within the first visual field range centered on the target point may be implemented as following steps B1 to B4.

In step B1, a feature value of the target point in the first input information is determined as a first query feature of the target point.

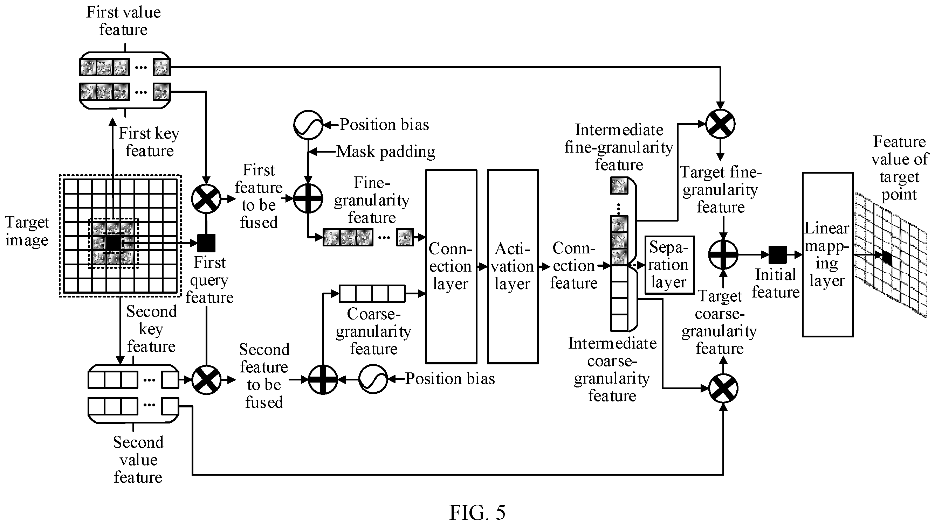

The false twist component of the texturing machine is cut out from the target image to obtain pixel points including the false twist component, that is the target points. The black rectangular frame in FIG. 5 is a target point.

In step B2, the first visual field range of the target point is determined by centering on position coordinates of the target point in the first input information.

The first visual field range may be $3\times3$ or $5\times5$, which may be determined based on an actual situation and is not limited in the embodiments of the present disclosure. The first visual field range of the embodiments of the present disclosure is shown in the grey rectangular frames around the target point in FIG. 5.

In step B3, a first key feature and a first value feature of the target point are constructed based on feature values of feature points other than the target point in the first visual field range.

In step B4, the fine-granularity feature of the target point is determined based on the first query feature, the first key feature and the first value feature.

In a possible implementation, a set of pixels in a sliding window centered on (i, j) on a feature map constructed from the first input information is defined as $\rho(i, j)$. For a fixed window size $k\times k$, $\|\rho(i, j)\| = k^2$. The first query feature and the first key feature may satisfy the formula (1), so as to obtain the fine-granularity feature $S_{(i,j)\sim\rho(i,j)}$:

$$S_{(i,j)\sim\rho(i,j)} = Q_{(i,j)}K^T_{\rho(i,j)} \qquad (1)$$

In another possible implementation, another fine-granularity feature may be obtained by introducing a position bias and a mask filling manner. As shown in FIG. 5, in a path of obtaining the fine-granularity feature (hereinafter referred to as a first path), the position bias is a relative position relationship between fine-granularity tokens within the first visual field range, which may also be understood as a relative position relationship between pixels within the first visual field range.

In the first path, it inevitably calculates similarities between pixels at edges of the feature map and zero paddings outside the edges. To prevent these zero similarities from affecting a softmax operation, a padding mask is used to set these results to $-\infty$.

As such, as shown in FIG. 5, on the first path, a first feature to be fused is obtained after performing a multiplication operation on the first query feature and the first key feature as the formula (1), and the first feature to be fused and the position bias processed by mask filling on the first path are added pixel by pixel to obtain the fine-granularity feature.

In the embodiments of the present disclosure, the fine-granularity feature extracted by combining the target point features and adjacent pixels within the first visual field range has a strong expressive ability, and may lay a foundation for determining the fault detection results subsequently.

In step A12, a coarse-granularity feature of the target point is extracted within a second visual field range centered on the target point.

In some embodiments, extracting the coarse-granularity feature of the target point within the second visual field range centered on the target point may be implemented as following steps C1 to C3.

In step C1, the second visual field range of the target point is determined by centering on the position coordinates of the target point in the first input information.

As shown in FIG. 5, the second visual field range is pixel points in a wider range including the first visual field and centered on the target point, that is the white rectangle frame shown in FIG. 5.

In step C2, a second key feature and a second value feature of the target point are constructed based on feature values of feature points other than the target point in the second visual field range.

In step C3, the coarse-granularity feature of the target point is determined based on the first query feature, the second key feature and the second value feature of the target point. Where the feature value of the target point in the first input information is the first query feature of the target point.

In a possible implementation, a set of pixels centered on *(i, j)* in the second visual field range on the feature map constructed from the first input information is defined as $\rho'(i, j)$. A set of pixels obtained by pooling in the second visual field range is defined as $\sigma(X)$. For a pooling size $H_p \times W_p$, $\|\sigma(X)\| = H_p W_p$, so as to obtain the coarse-granularity feature:

$$S_{(i,j)\sim\sigma(X)} = Q_{(i,j)} K^T_{\sigma(X)} \tag{2}$$

In another possible implementation, another coarse-granularity feature may be obtained by introducing the position bias and the mask filling manner. In a path of obtaining the coarse-granularity feature (hereinafter referred to as a second path), the position bias is a relative position relationship between coarse-granularity tokens.

In order to further enhance a scalability of a multi-scale image input with pixel focused attention, a different method is used to calculate the position bias, which may be $B_{(i,j)\sim\sigma(X)}$ within the second visual field range.

As shown in FIG. 5, on the second path, in order to perceive global features adjacent to the target point, a pooling operation may be firstly performed within the second visual field range. A pooling window and a step size may be determined based on an actual situation. The pooling operation generates a new feature map by moving the pooling window on the target image, selecting a pixel with a maximum or average value.

On the second path, logarithmic interval continuous position bias (log-CPB) is used, where ReLU (an activation function) is used to calculate $B_{(i,j)}\sim\sigma(X)$ from spatial relative coordinates $\Delta_{(i,j)}\sim\sigma(X)$ between position coordinates ($Q_{(i,j)}$) of the first query feature and a set of pixels ( $K^T_{\sigma(X)}$ ) of the second key feature.

As such, as shown in FIG. 5, a second feature to be fused is obtained after performing a multiplication operation on the first query feature and the second key feature as the formula (2), and the second feature to be fused and the position bias are added pixel by pixel to obtain the coarse-granularity feature.

In the embodiments of the present disclosure, the coarse-granularity feature extracted by combining the target point features and adjacent pixels within the second visual field has a stronger expressive ability, which may lay the foundation for determining the fault detection results subsequently.

In step A13, the fine-granularity feature and the coarse-granularity feature are spliced to obtain an initial feature of the target point.

The initial feature of the target point is obtained by jointing the fine-granularity feature and the coarse-granularity feature in an adding form.

In step A14, the initial feature of the target point is mapped to a feature value of the target point by using a nonlinear mapping method.

In step A2, feature values of the plurality of target points are jointed according to position information of the respective target points in the target image, to obtain the first sub feature.

As shown in FIG. 5, the coarse-granularity feature and the fine-granularity feature are input into a connection layer and an activation layer to obtain a connection feature. A separation layer is used to separate the connection feature, so as to split the coarse-granularity feature and the fine-granularity feature, thus finally obtaining an intermediate coarse-granularity feature and an intermediate fine-granularity feature. A multiplication operation is performed on the first value feature and the intermediate fine-granularity feature to obtain a target fine-granularity feature. A multiplication operation is performed on the second value feature and the intermediate coarse-granularity feature to obtain a target coarse-granularity feature. The initial feature is obtained by performing an adding operation on the target fine-granularity feature and the target coarse-granularity feature. Then the feature value of the target point is obtained by making the initial feature pass through a nonlinear mapping layer. Above operations are repeated for each target point to obtain the first sub feature.

In the embodiments of the present disclosure, the coarse-granularity features are used to capture an overall structure of the image. The fine-granularity features are more specific and accurate, and capturing both the coarse-granularity features and the fine-granularity features of the target points may better identify the fault in the false twist components of the texturing machine.

In some embodiments, obtaining the mask map by using the residual constructed based on the second input information may be implemented as following steps D1 to D3.

In step D1, Fourier transform is performed on the second input information by using a Fourier filter to obtain a time-varying component.

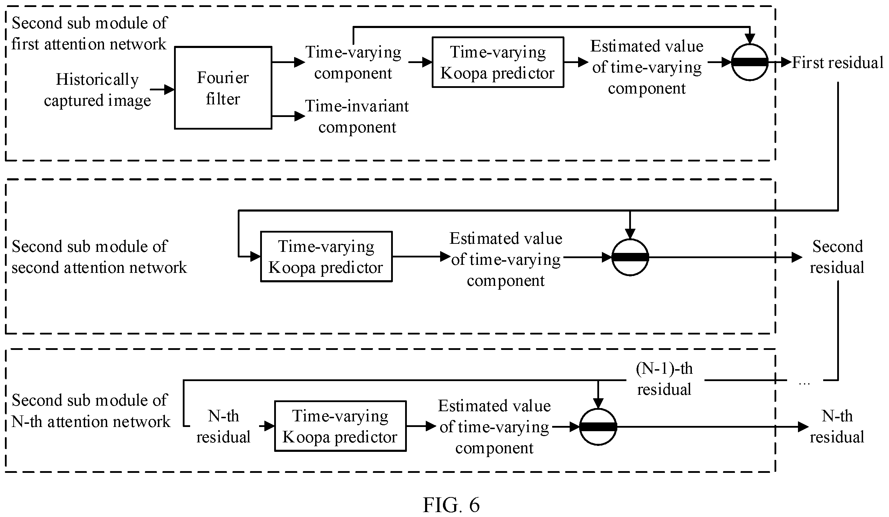

For the second sub module of the first attention module in the attention network, the second input information is the historically captured image which is captured previously. For the second sub modules of each of the second attention module to the N-th attention module in the attention network, the second input information is a residual output by a previous attention module. A framework diagram of the second sub module of each attention network is shown in FIG. 6.

In step D2, the time-varying component is input into an estimation module constructed based on a neural network to obtain an estimated value of the time-varying component.

In step D3, a residual between the time-varying component and the estimated value of the time-varying component is determined to obtain the mask map.

Where the estimation module constructed based on the neural network may be a time-varying Koopa predictor, a Koopa model consists of a plurality layers of stackable Koopa basic modules.

Each Koopa basic module focuses on learning specific levels of dynamic characteristics, and by staking the Koopa basic modules, the model can capture multi-level and complex dynamic changes in time series. Each Koopa basic module hierarchically learns an operator by taking the residual of the previous module's fitted dynamics as an input. The method proposed in the embodiments of the present disclosure improves prediction accuracy of the time-varying Koopa predictor and enhances adaptability of the model to a complex, nonlinear, and non-stationary time series, in order to extract dynamic variation features of the false twist component.

**2) Decoder network**

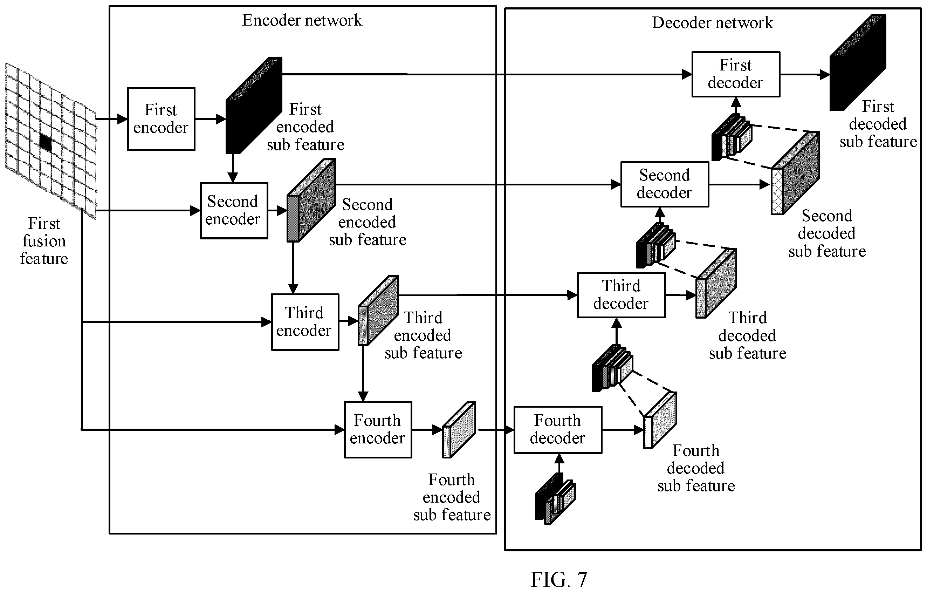

In some embodiments, the encoders in the encoder network correspond to the decoders in the decoder network one by one. As shown in FIG. 7, the encoder network shows a case of four encoders, and the decoder network shows a case of four decoders. No matter how many encoders and decoders exist, decoding the encoder feature based on the decoder network to obtain the decoded feature may be implemented as following steps E1 and E2.

In step E1, following steps E11 to E14 are performed for each target decoder in the decoder network.

In step E11, the encoded sub feature output by an encoder corresponding to the target decoder is obtained as a third query feature of the target decoder.

The four encoders shown in the encoder network in FIG. 7 is taken as an example to process a target image having a size of $H \times W \times 3$, H is the height of the target image, W is the width of the target image, and the four encoders $i \in$ {1, 2, ..., 4} respectively generate hierarchical and multi-resolution sub features $E_i$, where $\frac{H}{2^{i+1}} \times \frac{W}{2^{i+1}} \times C_i$, $C_i$ represents a weight corresponding to an i-th encoder. It may be understood that a first encoder processes an image of $\frac{H}{4} \times \frac{W}{4} \times C_1$, a second encoder processes an image of $\frac{H}{8} \times \frac{W}{8} \times C_2$, a third encoder processes an image of $\frac{H}{16} \times \frac{W}{16} \times C_3$, and a fourth encoder processes an image of $\frac{H}{32} \times \frac{W}{32} \times C_4$.

In FIG. 7, an execution order of the encoders in the encoder network is the first encoder, the second encoder, the third encoder, and the fourth encoder. On the basis of completing executions of the encoder network, an execution order of the decoder network is a fourth decoder, a third decoder, a second decoder, a first decoder.

Where as shown in FIG. 7, a third query feature of the first decoder is a first encoded sub feature output by the first encoder, a third query feature of the second decoder is a second encoded sub feature output by the second encoder, a third query feature of the third decoder is a third encoded sub feature output by the third encoder, and a third query feature of the fourth decoder is a fourth encoded sub feature output by the fourth encoder.

In step E12, in a case where the target decoder is the first decoder, encoded sub features of all encoders in the encoder network are obtained to construct a third value feature and a third key feature of the target encoder.

In step E13, in a case where the target decoder is any one decoder other than the first decoder, decoded sub features of respectively previous decoders before the target decoder are obtained as preferred sub features, and for a feature set constructed from the encoded sub features of respective encoders, the preferred sub features are used to replace encoded sub features of encoders corresponding to the previous decoders to obtain the third value feature and the third key feature of the target encoder.

As shown in FIG. 7, on the basis of completing processing of the encoder network, the first encoded sub feature, the second encoded sub feature, the third encoded sub feature and the fourth encoded sub feature are obtained. The third value feature and the third key feature input by the fourth decoder are determined based on the first encoded sub feature, the second encoded sub feature, the third encoded sub feature and the fourth encoded sub feature. On the basis of obtaining the fourth decoded sub feature, the fourth decoded sub feature is used to replace the fourth encoded sub feature in the original third value feature and third key feature as an input of the third decoder, to obtain the third decoded sub feature of the third decoder, and then processing is performed sequentially to obtain the first decoded sub feature, the second decoded sub feature, the third decoded sub feature and the fourth decoded sub feature output by the decoder network.

In step E14, the third query feature, the third value feature and the third key feature are input into the target decoder to obtain the decoded sub feature output by the target decoder.

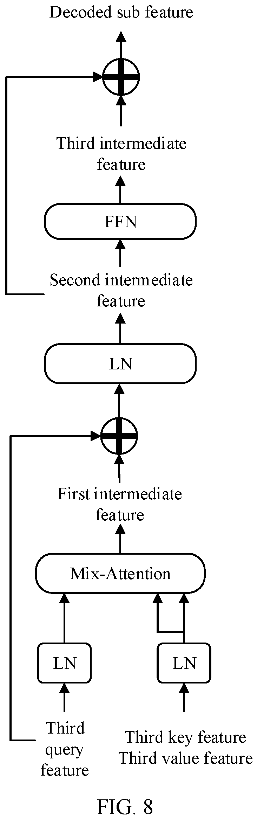

In some embodiments, an architecture of each decoder is shown in FIG. 8, includes a mix-attention mechanism module (Mix-Attention), a layer normalization module (LN) and a feedforward network module (FFN). A specific way for obtaining the decoded sub feature output by the target decoder may be implemented as following steps F1 to F4.

In step F1, the third query feature, the third key feature and the third value feature are input into the mix-attention mechanism module to obtain a first intermediate feature.

In step F2, the first intermediate feature and the third query feature are fused and then input into the layer normalization module to obtain a second intermediate feature.

In step F3, the second intermediate feature is input into the feedforward network to obtain a third intermediate feature.

In step F4, the second intermediate feature and the third intermediate feature are fused to obtain the decoded sub feature output by the target decoder.

In step E2, the decoded feature is constructed based on the decoded sub features of respective decoders.

On the basis of obtaining four decoded sub features, they are fused to obtain the decoded feature. A fusion method may be a manner of weighting and summing, jointing, and the like.

In the embodiments of the present disclosure, compared to self-attention in which encoders for generating a query feature, a key feature, and a value feature are the same and come from the same source, i.e., the same encoder/decoder stage. In the embodiments of the present disclosure, the mix-attention mechanism module adopts multi-scale stage mixed features, and each feature comes from an independent encoder. By allowing the query features to find matches during all different stages, a degree to which contextual granularities may be matched may be enhanced, thereby improving accuracy of fault detection in the target image.

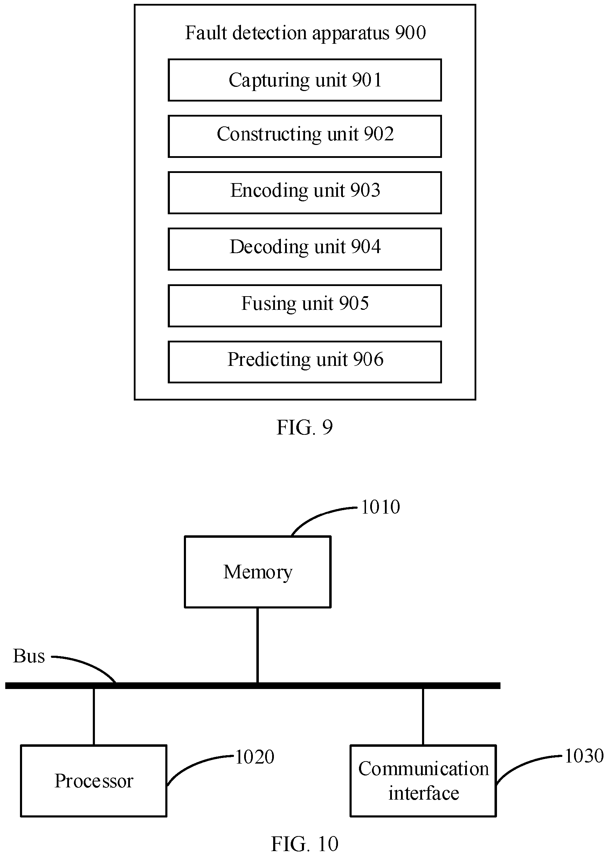

Based on the same technical concept, the embodiments of the present disclosure provide a fault detection apparatus 900, as shown in FIG. 9, which includes:

a capturing unit 901 configured to capture an image of a false twist component of a texturing machine to obtain a target image;

a constructing unit 902 configured to construct a first fusion feature based on at least one attention module in an attention network; where for each attention module, the attention module includes a first sub module and a second sub module, the first sub module constructs a first sub feature with respect to fine-granularity features within first visual field ranges and coarse-granularity features within second visual field ranges in first input information, and the second sub module obtains a mask map by using a residual constructed based on second input information, an output feature of the attention module is obtained by multiplying the mask map with the first sub feature, and the first visual field ranges are smaller than the second visual field ranges;

an encoding unit 903 configured to input the first fusion feature into an encoder network to obtain an encoded feature; where the encoder network includes a plurality of encoders, each encoder outputs a corresponding encoded sub feature, and the encoded feature includes the encoded sub feature of at least one encoder;

a decoding unit 904 configured to decode the encoded feature based on a decoder network to obtain a decoded feature; where the decoder network includes a plurality of decoders, each decoder outputs a corresponding decoded sub feature, and the decoded feature includes decoded sub features of the plurality of decoders;

a fusing unit 905 configured to fuse the respective decoded sub features in the decoded feature to obtain a second fusion feature; and

a predicting unit 906 configured to input the second fusion feature into a multi-layer perceptron to obtain a fault detection result of the false twist component of the texturing machine.

In some embodiments, for a first attention module in the attention network:

the first input information of the first sub module of the first attention module is the target image; and

the second input information of the second sub module of the first attention module includes the target image and at least one historically captured image of the false twist component, and a capturing time interval between the target image and any one historically captured image is less than a preset time period; and

for any one attention module other than the first attention module in the attention network:

the first input information of the first sub module of the any one attention module is the output feature output by a previous attention module of the any one attention module; and

the second input information of the second sub module of the any one attention module is a residual output by the second sub module of the previous attention module of the any one attention module.

In some embodiments, the constructing unit includes:

a determining sub unit configured to determine a plurality of target points in the first input information and performing following operations on each target point:

extracting a fine-granularity feature of the target point within a first visual field range centered on the target point;

extracting a coarse-granularity feature of the target point within a second visual field range centered on the target point;

jointing the fine-granularity feature and the coarse-granularity feature to obtain an initial feature of the target point; and

mapping the initial feature of the target point to a feature value of the target point by using a nonlinear mapping method; and

a jointing sub unit configured to joint feature values of the plurality of target points according to position information of the respective target points in the target image, to obtain the first sub feature.

In some embodiments, the determining sub unit is specifically configured to:

determine a feature value of the target point in the first input information as a first query feature of the target point;

determine the first visual field range of the target point by centering on position coordinates of the target point in the first input information;

construct a first key feature and a first value feature of the target point based on feature values of feature points other than the target point in the first visual field range; and

determine the fine-granularity feature of the target point based on the first query feature, the first key feature and the first value feature.

In some embodiments, the determining sub unit is specifically configured to:

determine the second visual field range of the target point by centering on position coordinates of the target point in the first input information;

construct a second key feature and a second value feature of the target point based on feature values of feature points other than the target point in the second visual field range; and

determine the coarse-granularity feature of the target point based on a first query feature, the second key feature and the second value feature of the target point, where a feature value of the target point in the first input information is the first query feature of the target point.

In some embodiments, the constructing unit is specifically configured as:

a transforming sub unit configured to perform Fourier transform on the second input information by using a Fourier filter to obtain a time-varying component;

an estimating sub unit configured to input the time-varying component into an estimation module constructed based on a neural network to obtain an estimated value of the time-varying component; and

a residual determining sub unit configured to determine a residual between the time-varying component and the estimated value of the time-varying component, to obtain the mask map.

In some embodiments, the encoders in the encoder network correspond to the decoders in the decoder network one by one, and the decoding unit includes:

A decoded sub feature determining sub unit with respect to each target decoder in the decoder network, each target decoder includes a processing sub unit including:

obtaining the encoded sub feature output by an encoder corresponding to the target decoder as a third query feature of the target decoder; and

in a case where the target decoder is a first decoder, obtaining encoded sub features of all encoders in the encoder network to construct a third value feature and a third key feature of the target encoder;

in a case where the target decoder is any one decoder other than the first decoder, obtaining decoded sub features of respectively previous decoders before the target decoder as preferred sub features; and for a feature set constructed from the encoded sub features of respective encoders, using the preferred sub features to replace encoded sub features of encoders corresponding to the previous decoders to obtain the third value feature and the third key feature of the target encoder; and

inputting the third query feature, the third value feature and the third key feature into the target decoder to obtain the decoded sub feature output by the target decoder; and

a decoded feature constructing sub unit configured to construct the decoded feature based on the decoded sub features of the respective decoders.

In some embodiments, the decoded sub feature sub unit is specifically configured to:

input the third query feature, the third key feature and the third value feature into a mix-attention mechanism module to obtain a first intermediate feature;

fuse the first intermediate feature and the third query feature and then inputting into a layer normalization module to obtain a second intermediate feature;

input the second intermediate feature into a feedforward network to obtain a third intermediate feature; and

fuse the second intermediate feature and the third intermediate feature to obtain the decoded sub feature output by the target decoder.

Descriptions of specific functions and examples of each module, sub module/unit in the apparatus in the embodiments of the present disclosure may refer to related descriptions of corresponding steps of the above method embodiments, and will not be repeated here.

Acquisition, storage, and application of user personal information involved in the technical solution of the present disclosure comply with relevant laws and regulations, and do not violate public order and good customs.

FIG. 10 is a structural block diagram of an electronic device according to an embodiment of the present disclosure. As shown in FIG. 10, the electronic device includes: a memory 1010 and a processor 1020, and the memory 1010 stores a computer program that can run on the processor 1020. There may be one or more memories 1010 and processors 1020. The memory 1010 may store one or more computer programs, and the one or more computer programs cause the electronic device to perform the method provided in the above method embodiment, when executed by the electronic device. The electronic device may also include: a communication interface 1030 configured to communicate with an external device for data interactive transmission.

If the memory 1010, the processor 1020 and the communication interface 1030 are implemented independently, the memory 1010, the processor 1020 and the communication interface 1030 may be connected to each other and complete communication with each other via a bus. The bus may be an industry standard architecture (ISA) bus, a peripheral component interconnect (PCI) bus, or an extended industry standard architecture (EISA) bus, etc. The bus may be divided into an address bus, a data bus, a control bus, etc. For ease of representation, the bus is represented by only one thick line in FIG. 10, but this thick line does not represent only one bus or only one type of bus.

Optionally, in a specific implementation, if the memory 1010, the processor 1020 and the communication interface 1030 are integrated on one chip, the memory 1010, the processor 1020 and the communication interface 1030 may communicate with each other via an internal interface.

It should be understood that the above processor may be a central processing unit (CPU) or other general-purpose processor, a digital signal processor (DSP), an application specific integrated circuit (ASIC), a field programmable gate array (FPGA) or other programmable logic device, a discrete gate or transistor logic device, a discrete hardware component, etc. The general-purpose processor may be a microprocessor or any conventional processor, etc. It is worth noting that the processor may be a processor that supports the Advanced RISC Machines (ARM) architecture.

Further, optionally, the above-mentioned memory may include a read-only memory and a random access memory, and may also include a non-volatile random access memory. The memory may be a volatile memory or a non-volatile memory, or may include both a volatile memory and a non-volatile memory. Here, the non-volatile memory may include a read-only memory (ROM), a programmable ROM (PROM), an erasable PROM (EPROM), an electrically EPROM (EEPROM) or a flash memory. The volatile memory may include a random access memory (RAM), which acts as an external cache. By way of illustration and not limitation, many forms of RAMs are available, for example, static RAM (SRAM), dynamic random access memory (DRAM), synchronous DRAM (SDRAM), double data rate SDRAM (DDR SDRAM), enhanced SDRAM (ESDRAM), synchlink DRAM (SLDRAM) and direct RAMBUS RAM (DR RAM).

The above embodiments may be implemented in whole or in part by software, hardware, firmware or any combination thereof. When implemented by software, they may be implemented in the form of a computer program product in whole or in part. The computer program product includes one or more computer instructions. When the computer instructions are loaded and executed on a computer, the processes or functions described in the embodiments of the present disclosure are generated in whole or in part. The computer may be a general-purpose computer, a special-purpose computer, a computer network, or other programmable device. The computer instructions may be stored in a computer readable storage medium or transmitted from a computer readable storage medium to another computer readable storage medium. For example, the computer instructions may be transmitted from a website, computer, server or data center to another website, computer, server or data center in a wired (e.g., coaxial cable, optical fiber, digital subscriber line (DSL)) or wireless (e.g., infrared, Bluetooth, microwave, etc.) way. The computer readable storage medium may be any available medium that can be accessed by a computer, or a data storage device such as server or data center that is integrated with one or more available media. The available media may be magnetic media (for example, floppy disk, hard disk, magnetic tape), optical media (for example, digital versatile disc (DVD)), or semiconductor media (for example, solid state disk (SSD)), etc. It is worth noting that the computer readable storage medium mentioned in the present disclosure may be a non-volatile storage medium, in other words, may be a non-transitory storage medium.

Those having ordinary skill in the art can understand that all or some of the steps for implementing the above embodiments may be completed by hardware, or may be completed by instructing related hardware through a program. The program may be stored in a computer readable storage medium. The above-mentioned storage medium may be a read-only memory, a magnetic disk or an optical disk, etc.

In the description of the embodiments of the present disclosure, the description with reference to the terms "an embodiment", "some embodiments", "example", "specific example" or "some examples", etc. means that specific features, structures, materials or characteristics described in conjunction with the embodiment or example are included in at least one embodiment or example of the present disclosure. Moreover, specific features, structures, materials or characteristics described may be combined in a suitable manner in any one or more embodiments or examples. In addition, those skilled in the art can integrate and combine different embodiments or examples and features of different embodiments or examples described in this specification without conflicting with each other.

In the description of the embodiments of the present disclosure, "/" represents or, unless otherwise specified. For example, A/B may represent A or B. The term "and/or" herein only describes an association relation of associated objects, which indicates that there may be three kinds of relations, for example, A and/or B may indicate that only A exists, or both A and B exist, or only B exists.

In the description of the embodiments of the present disclosure, the terms "first" and "second" are only for purpose of description, and cannot be construed to indicate or imply the relative importance or implicitly point out the number of technical features indicated. Therefore, the feature defined with "first" or "second" may explicitly or implicitly include one or more features. In the description of the embodiments of the present disclosure, "a plurality of" means two or more, unless otherwise specified.

The above descriptions are only example embodiments of the present disclosure and not intended to limit the present disclosure. Any modifications, equivalent replacements, improvements and others made within the principle of the present disclosure shall be contained in the protection scope of the present disclosure.

**Claims**

1.    A fault detection method comprising:

capturing (S301) an image of a false twist component of a texturing machine to obtain a target image;
constructing (S302) a first fusion feature based on at least one attention module in an attention network; wherein for each attention module, the attention module comprises a first sub module and a second sub module, the first sub module constructs a first sub feature with respect to fine-granularity features within first visual field ranges and coarse-granularity features within second visual field ranges in first input information, and the second sub module obtains a mask map by using a residual constructed based on second input information, an output feature of the attention module is obtained by multiplying the mask map with the first sub feature, and the first visual field ranges are smaller than the second visual field ranges;
inputting (S303) the first fusion feature into an encoder network to obtain an encoded feature; wherein the encoder network comprises a plurality of encoders, each encoder outputs a corresponding encoded sub feature, and the encoded feature comprises the encoded sub feature of at least one encoder;
decoding (S304) the encoded feature based on a decoder network to obtain a decoded feature; wherein the decoder network comprises a plurality of decoders, each decoder outputs a corresponding decoded sub feature, and the decoded feature comprises decoded sub features of the plurality of decoders;
fusing (S305) the respective decoded sub features in the decoded feature to obtain a second fusion feature; and

inputting (S306) the second fusion feature into a multi-layer perceptron to obtain a fault detection result of the false twist component of the texturing machine.

2. The method of claim 1, wherein:

for a first attention module in the attention network:

the first input information of the first sub module of the first attention module is the target image; and the second input information of the second sub module of the first attention module comprises the target image and at least one historically captured image of the false twist component, and a capturing time interval between the target image and any one historically captured image is less than a preset time period;

for any one attention module other than the first attention module in the attention network:

the first input information of the first sub module of the any one attention module is the output feature output by a previous attention module of the any one attention module; and the second input information of the second sub module of the any one attention module is a residual output by the second sub module of the previous attention module of the any one attention module.

3. The method of claim 1 or claim 2, wherein constructing the first sub feature with respect to the fine-granularity features within the first visual field ranges and the coarse-granularity features within the second visual field ranges in the first input information comprises:

determining a plurality of target points in the first input information and performing following steps on each target point:

extracting a fine-granularity feature of the target point within a first visual field range centered on the target point; extracting a coarse-granularity feature of the target point within a second visual field range centered on the target point; jointing the fine-granularity feature and the coarse-granularity feature to obtain an initial feature of the target point; and mapping the initial feature of the target point to a feature value of the target point by using a nonlinear mapping method; and

jointing feature values of the plurality of target points according to position information of the respective target points in the target image, to obtain the first sub feature.

4. The method of claim 3, wherein extracting the fine-granularity feature of the target point within the first visual field range centered on the target point comprises:

determining a feature value of the target point in the first input information as a first query feature of the target point; determining the first visual field range of the target point by centering on position coordinates of the target point in the first input information; constructing a first key feature and a first value feature of the target point based on feature values of feature points other than the target point in the first visual field range; and determining the fine-granularity feature of the target point based on the first query feature, the first key feature and the first value feature.

5. The method of claim 3 or claim 4, wherein extracting the coarse-granularity feature of the target point within the second visual field range centered on the target point comprises:

determining the second visual field range of the target point by centering on position coordinates of the target point in the first input information; constructing a second key feature and a second value feature of the target point based on feature values of feature points other than the target point in the second visual field range; and determining the coarse-granularity feature of the target point based on a first query feature, the second key feature and the second value feature of the target point, wherein a feature value of the target point in the first input information is the first query feature of the target point.

6. The method of any one of claims 2 to 5, wherein obtaining the mask map by using the residual constructed based on the second input information comprises:

performing Fourier transform on the second input information by using a Fourier filter to obtain a time-varying component;
inputting the time-varying component into an estimation module constructed based on a neural network to obtain an estimated value of the time-varying component; and
determining a residual between the time-varying component and the estimated value of the time-varying component, to obtain the mask map.

7. The method of any one of claims 1 to 6, wherein each encoder in the encoder network corresponds to a respective decoder in the decoder network, and decoding the encoder feature based on the decoder network to obtain the decoded feature comprises:

performing the following steps on each target decoder in the decoder network:

obtaining the encoded sub feature output by an encoder corresponding to the target decoder as a third query feature of the target decoder;
in a case where the target decoder is a first decoder, obtaining encoded sub features of all encoders in the encoder network to construct a third value feature and a third key feature of the target encoder;
in a case where the target decoder is any one decoder other than the first decoder, obtaining decoded sub features of respectively previous decoders before the target decoder as preferred sub features; and for a feature set constructed from the encoded sub features of respective encoders, using the preferred sub features to replace encoded sub features of encoders corresponding to the previous decoders to obtain the third value feature and the third key feature of the target encoder; and
inputting the third query feature, the third value feature and the third key feature into the target decoder to obtain the decoded sub feature output by the target decoder; and

constructing the decoded feature based on the decoded sub features of the respective decoders;
wherein inputting the third query feature, the third value feature and the third key feature into the target decoder to obtain the decoded sub feature output by the target decoder, comprises:

inputting the third query feature, the third key feature and the third value feature into a mix-attention mechanism module to obtain a first intermediate feature;
fusing the first intermediate feature and the third query feature and then inputting into a layer normalization module to obtain a second intermediate feature;
inputting the second intermediate feature into a feedforward network to obtain a third intermediate feature; and
fusing the second intermediate feature and the third intermediate feature to obtain the decoded sub feature output by the target decoder.

8. A fault detection apparatus (900) comprising:

a capturing unit (901) configured to capture an image of a false twist component of a texturing machine to obtain a target image;
a constructing unit (902) configured to construct a first fusion feature based on at least one attention module in an attention network; wherein for each attention module, the attention module comprises a first sub module and a second sub module, the first sub module constructs a first sub feature with respect to fine-granularity features within first visual field ranges and coarse-granularity features within second visual field ranges in first input information, and the second sub module obtains a mask map by using a residual constructed based on second input information, an output feature of the attention module is obtained by multiplying the mask map with the first sub feature, and the first visual field ranges are smaller than the second visual field ranges;
an encoding unit (903) configured to input the first fusion feature into an encoder network to obtain an encoded feature; wherein the encoder network comprises a plurality of encoders, each encoder outputs a corresponding encoded sub feature, and the encoded feature comprises the encoded sub feature of at least one encoder;
a decoding unit (904) configured to decode the encoded feature based on a decoder network to obtain a decoded feature; wherein the decoder network comprises a plurality of decoders, each decoder outputs a corresponding decoded sub feature, and the decoded feature comprises decoded sub features of the plurality of decoders;

a fusing unit (905) configured to fuse the respective decoded sub features in the decoded feature to obtain a second fusion feature; and

a predicting unit (906) configured to input the second fusion feature into a multi-layer perceptron to obtain a fault detection result of the false twist component of the texturing machine.

9. The apparatus of claim 8, wherein:

for a first attention module in the attention network:

the first input information of the first sub module of the first attention module is the target image; and the second input information of the second sub module of the first attention module comprises the target image and at least one historically captured image of the false twist component, and a capturing time interval between the target image and any one historically captured image is less than a preset time period;

for any one attention module other than the first attention module in the attention network:

the first input information of the first sub module of the any one attention module is the output feature output by a previous attention module of the any one attention module; and the second input information of the second sub module of the any one attention module is a residual output by the second sub module of the previous attention module of the any one attention module.

10. The apparatus of claim 8 or claim 9, wherein the constructing unit comprises:

a determining sub unit configured to determine a plurality of target points in the first input information and performing the following operations on each target point:

extracting a fine-granularity feature of the target point within a first visual field range centered on the target point;
extracting a coarse-granularity feature of the target point within a second visual field range centered on the target point;
jointing the fine-granularity feature and the coarse-granularity feature to obtain an initial feature of the target point; and
mapping the initial feature of the target point to a feature value of the target point by using a nonlinear mapping method; and

a jointing sub unit configured to joint feature values of the plurality of target points according to position information of the respective target points in the target image, to obtain the first sub feature.

11. The apparatus of claim 10, wherein the determining sub unit is configured to:

determine a feature value of the target point in the first input information as a first query feature of the target point;
determine the first visual field range of the target point by centering on position coordinates of the target point in the first input information;
construct a first key feature and a first value feature of the target point based on feature values of feature points other than the target point in the first visual field range; and
determine the fine-granularity feature of the target point based on the first query feature, the first key feature and the first value feature.

12. The apparatus of claim 10 or claim 11, wherein the determining sub unit is configured to:

determine the second visual field range of the target point by centering on position coordinates of the target point in the first input information;
construct a second key feature and a second value feature of the target point based on feature values of feature points other than the target point in the second visual field range; and
determine the coarse-granularity feature of the target point based on a first query feature, the second key feature and the second value feature of the target point, wherein a feature value of the target point in the first input information is the first query feature of the target point.

13. The apparatus of any one of claims 9 to 12, wherein the constructing unit comprises:

a transforming sub unit configured to perform Fourier transform on the second input information by using a Fourier filter to obtain a time-varying component;
an estimating sub unit configured to input the time-varying component into an estimation module constructed based on a neural network to obtain an estimated value of the time-varying component; and
a residual determining sub unit configured to determine a residual between the time-varying component and the estimated value of the time-varying component, to obtain the mask map.

14. The apparatus of any one of claims 8 to 13, wherein each encoder in the encoder network corresponds to a respective decoder in the decoder network, and the decoding unit comprises:

a decoded sub feature determining sub unit configured to perform the following operations on each target decoder in the decoder network:

obtaining the encoded sub feature output by an encoder corresponding to the target decoder as a third query feature of the target decoder;
in a case where the target decoder is a first decoder, obtaining encoded sub features of all encoders in the encoder network to construct a third value feature and a third key feature of the target encoder;
in a case where the target decoder is any one decoder other than the first decoder, obtaining decoded sub features of respectively previous decoders before the target decoder as preferred sub features; and for a feature set constructed from the encoded sub features of respective encoders, using the preferred sub features to replace encoded sub features of encoders corresponding to the previous decoders to obtain the third value feature and the third key feature of the target encoder; and
inputting the third query feature, the third value feature and the third key feature into the target decoder to obtain the decoded sub feature output by the target decoder; and

a decoded feature constructing sub unit configured to construct the decoded feature based on the decoded sub features of the respective decoders;
wherein the decoded sub feature determining sub unit is configured to:

input the third query feature, the third key feature and the third value feature into a mix-attention mechanism module to obtain a first intermediate feature;
fuse the first intermediate feature and the third query feature and then input into a layer normalization module to obtain a second intermediate feature;
input the second intermediate feature into a feedforward network to obtain a third intermediate feature; and
fuse the second intermediate feature and the third intermediate feature to obtain the decoded sub feature output by the target decoder.

15. A non-transitory computer-readable storage medium storing a computer instruction thereon, wherein the computer instruction, when executed by a computer, causes the computer to perform the method of any one of claims 1 to 7.

FIG. 1

First yarn

Second yarn

FIG. 2

S301

Capture an image of a false twist component of a texturing machine to obtain a target image

S302

Construct a first fusion feature based on at least one attention module in an attention network; where for each attention module, the attention module includes a first sub module and a second sub module, the first sub module constructs a first sub feature with respect to fine-granularity features within first visual field ranges and coarse-granularity features within second visual field ranges in first input information, and the second sub module obtains a mask map by using a residual constructed based on second input information, an output feature of the attention module is obtained by multiplying the mask map with the first sub feature, and the first visual field ranges are smaller than the second visual field ranges

S303

Input the first fusion feature into an encoder network to obtain an encoded feature; where the encoder network includes a plurality of encoders, each encoder outputs a corresponding encoded sub feature, and the encoded feature includes the encoded sub feature of at least one encoder

S304

Decode the encoded feature based on a decoder network to obtain a decoded feature; where the decoder network includes a plurality of decoders, each decoder outputs a corresponding decoded sub feature, and the decoded feature includes decoded sub features of the plurality of decoders

S305

Fuse the respective decoded sub features in the decoded feature to obtain a second fusion feature

S306

Input the second fusion feature into a multi-layer perceptron to obtain a fault detection result of the false twist component of the texturing machine

FIG. 3

FIG. 4

FIG. 5

FIG. 6

FIG. 7

Decoded sub feature

Third intermediate
feature

FFN

Second intermediate
feature

LN

First intermediate
feature

Mix-Attention

LN          LN

Third
query       Third key feature
feature     Third value feature

FIG. 8

Fault detection apparatus 900

Capturing unit 901

Constructing unit 902

Encoding unit 903

Decoding unit 904

Fusing unit 905

Predicting unit 906

FIG. 9

1010

Memory

Bus

1020

Processor

1030

Communication interface

FIG. 10

Europäisches
Patentamt

European
Patent Office

Office européen
des brevets

# EUROPEAN SEARCH REPORT

**Application Number**

EP 24 21 5947

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MILLMAN M P ET AL: "Computer vision for textured yarn interlace (nip) measurements at high speeds", MECHATRONICS, PERGAMON PRESS, OXFORD, GB, vol. 11, no. 8, 1 December 2001 (2001-12-01), pages 1025-1038, XP004306183, ISSN: 0957-4158, DOI: 10.1016/S0957-4158(00)00056-8 * abstract * * figure 1 * * Sect. 1 and 2.1 * | 1-15 | INV. G06T7/00 |
| T | ORTEGA MATHIAS ET AL: "A Review on False-Twist Texturing", FIBERS, vol. 12, no. 4, 7 April 2024 (2024-04-07), page 39, XP093262949, ISSN: 2079-6439, DOI: 10.3390/fib12040036 * the whole document * | | |

TECHNICAL FIELDS
SEARCHED    (IPC)

G06T
G06K
G06V

The present search report has been drawn up for all claims

| Place of search | Date of completion of the search | Examiner |
|---|---|---|
| Munich | 26 March 2025 | Scholz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)